# EUROPÄISCHE PATENTSCHRIFT

(11) **EP 1 512 690 B1**
(45) Veröffentlichungstag und Bekanntmachung des Hinweises auf die Patenterteilung: **02.07.2008**
(21) Anmeldenummer: 04018829.4
(22) Anmeldetag: 09.08.2004
(51) Int. Cl.: C07F 9/50

(54) **Verfahren zur Herstellung von 9,10-Dihydro-9-oxa-10-organyl-phosphaphenanthren-10-oxid und Derivaten desselben**
Process for the preparation of 9,10-dihydro-9-oxa-10-organyl-phosphaphenanthren-10-oxide and derivatives thereof
Procédé pour la préparation de 9,10-dihydro-9-oxa-10-organyl-phosphaphenanthrène-10-oxide et de ses dérivés

(30) Priorität: 15.08.2003 DE 10338116
(43) Veröffentlichungstag der Anmeldung: 09.03.2005
(73) Patentinhaber: Schill + Seilacher "Struktol" Aktiengesellschaft, 22113 Hamburg (DE)
(72) Erfinder: Dittrich, Uwe, Dr., 01445 Radebeul (DE); Just, Berthold, Dr., 22397 Hamburg (DE); Döring, Manfred, Prof. Dr., 76744 Wörth-Büchelberg (DE); Ciesielski, Michael, Dr., 06217 Merseburg (DE)
(74) Vertreter: UEXKÜLL & STOLBERG

(56) Entgegenhaltungen:
- EP-A- 0 304 782
- EP-A- 0 787 738
- DE-A- 10 206 982
- CHERNYSHEV E A ET AL: "ORGANOPHOSPHOROUS HETEROCYCLIC COMPOUNDS III. SYNTHESIS AND REACTIONS OF 6-CHLORO-6H-DIBENZC,E1,2OXAPHOSPHORINE" JOURNAL OF GENERAL CHEMISTRY OF THE USSR, CONSULTANTS BUREAU, NEW YORK, NY, US, Bd. 42, Januar 1972 (1972-01), Seiten 88-90, XP001056219 ISSN: 0022-1279

## Beschreibung

Die Erfindung betrifft ein neues Verfahren zur Herstellung von 9,10-Dihydro-9-oxa-10-organylphosphaphenanthren-10-oxid und dessen an den Phenylgruppen substituierten Derivaten. Ferner betrifft die Erfindung ein Verfahren zur Herstellung von flammhemmend ausgerüsteten Natur- und Kunststoffen unter Verwendung dieser Derivate.

Aus dem Stand der Technik ist ein Verfahren zur Herstellung von 9,10-Dihydro-9-oxa-10-alkoxyphosphaphenanthren-10-oxid und substituierten Derivaten desselben durch Alkoholyse von 9,10-Dihydro-9-oxa-10-halogenphosphaphenanthren-10-oxid und dessen substituierten Derivaten in Gegenwart stöchiometrischer Mengen Base, wie tertiären Aminen oder Ammoniak, bekannt. Siehe z.B. die EP-A-0 787 738, EP-A-0 304 782 sowie Phosphorus and Sulfur 1987, 31, Seite 71.

Als alternative Edukte, jedoch nur für die Herstellung von 9,10-Dihydro-9-oxa-10-aryloxyphosphaphenanthren-10-Derivaten, werden in der DE-A-20 34 887 oder der US-A-3 702 878 Triphenylphosphite oder Kombinationen aus Triphenylphosphit/PCl₃ offenbart. Diese Verfahren sind jedoch mit der Verwendung sehr hoher Reaktionstemperaturen von etwa 200 °C verbunden. Ferner sind Umesterungsreaktionen, die von den genannten Aryloxy-Derivaten ausgehen können, nur mit langkettigen, schwer flüchtigen Alkoholen möglich. Aus den 9,10-Dihydro-9-oxa-10-aryloxyphosphaphenanthren-Derivaten können durch weitere Umsetzung mit stöchiometrischen Mengen von Organylhalogeniden, vorzugsweise Bromide und Iodide, bzw. im Falle von Phosphiten auch mit stöchiometrischen Mengen Alkylierungsmitteln, die keine Halogenide enthalten, 9,10-Dihydro-9-oxa-10-organylphosphaphenanthren-10-oxid-Derivate erhalten werden. Dabei handelt es sich also um eine Anwendung der klassischen Michaelis-Arbusov-Reaktion (siehe Chem. Rev. 1981, 81, Seiten 415-430).

In Macromol. Rapid. Comm. 2001, 22, 1265-71 wird offenbart, dass 9-(9,10-Dihydro-9-oxa-10-phosphaphenanthren-10-oxid)-1-propen durch Umsetzung von 9,10-Dihydro-9-oxa-10-phosphaphenanthren-10-oxid (DOP) mit Methylenchlorid und Allylbromid erhalten werden kann. Auch die entsprechende Umsetzung mit Epichlorhydrin anstelle von Allylbromid wird offenbart, wodurch 9-(9,10-Dihydro-9-oxa-10-phosphaphenanthren-10-oxid)-2-propen-1-ol erhalten werden soll.

Aus der JP-A-2001270993 sind organische Phosphorverbindungen als Flammschutzadditive bekannt, bei denen gegebenenfalls substituierte9,10-Dihydro-9-oxa-10-phosphaphenanthren-10-Oxid-Einheiten durch zweiwertige Kohlenwasserstoffreste, die gegebenenfalls Heteroatome oder funktionelle Gruppen enthalten, verbunden sind. In Bezug auf die Herstellung dieser Phosphorverbindungen wird auf die JP-A-63135396 und 11106619 verwiesen. Der Abstract der JP-A-11106619 offenbart, dass bei der Herstellung halogenhaltige Verbindungen wie 1,2-Dichlorethan verwendet werden. Der Abstract der JP-A-63135396 offenbart, dass die Herstellung ausgehend von einem Phosphinsäurederivat, das eine aromatische Diolgruppe aufweist, erfolgt, welches mit einer Glycidylverbindung wie Polyethylenglycoldiglycidylether in Lösungsmittel, vorzugsweise in Gegenwart eines Katalysators, z.B. Li, Mg, Cu der Fe, unter Erwärmen umgesetzt wird.

Ähnliche verbrückte Phosphorverbindungen wie in der JP-A-2001270993 offenbart, werden in den JP-A-57105456 und 57105451 offenbart.

Die oben genannte Darstellung der 9,10-Dihydro-9-oxa-10-alkyloxyphosphaphenanthren-Derivate durch Alkoholyse der 9,10-Dihydro-9-oxa-10-halogenphosphaphenanthren-Derivate (Halogen z.B. Chlor) mittels Basen (EP-A-0 787 738) erfordert eine zweistufige vorhergehende Darstellung des 10-Halogen-Derivats mit einer unbefriedigenden Gesamtausbeute von unter 50 %.

Auch die Darstellung ausgehend von dem relativ teuren Edukt Triphenylphosphit bzw. Triphenlyphosphit/PCl₃ ist durch nachteilige Reaktionsbedingungen und eine eingeschränkte zugängliche Produktpalette, nämlich nur aromatische Substituenten, gekennzeichnet. Um zu den gewünschten Endprodukten, wie 9,10-Dihydro-9-oxa-10-organylphosphaphenanthren-10-oxid und dessen substituierten Derivaten zu gelangen, müssen jeweils weitere Reaktionsschritte unter Einsatz von stöchiometrischen Mengen weiterer Reaktanten erfolgen (Umesterung, stöchiometrische Michaelis-Arbusov-Reaktion). Es sind also jeweils mehrere (mindestens zwei bis zu vier) separate chemische Reaktionen, jeweils begleitet von aufwendigen Reinigungs- und Trennoperationen durchzuführen.

Ein weiterer Nachteil der Verfahren des Standes der Technik ist, dass halogenhaltige Reaktanten in stöchiometrischen Mengen verwendet werden müssen. Beispiele dafür sind die oben genannte klassische Michaelis-Arbusov-Reaktion oder die stöchiometrische Umsetzung mit Allylbromid wie in Macromol. Rapid. Comm. 2001, 22, 1265-71 beschrieben.

Andererseits ist 9,10-Dihydro-9-oxa-10-phosphaphenanthren-10-oxid (DOP) kommerziell in industriellem Maßstab erhältlich und kann in Ausbeuten von über 95 % in einer einstufigen Synthese hergestellt werden, siehe z.B. die EP-A-0 806 429.

Die EP-A-1 279 719 beschreibt flammhemmende Faserbehandlungsmittel auf der Basis von Derivaten von DOP. Als Substituenten am Phosphor sind Alkyl-, Hydroxyalkyl-, Aralkyl-, Bernsteinsäureimid-, Hydroxy-, Alkoxy- oder Aralkoxygruppen vorgesehen. In der US-A-4 228 064 und der US-A-4 198 492 werden ähnliche Verbindungen zur Herstellung von flammhemmend ausgerüsteten Polyphenylenetherharz-Zusammensetzungen vorgeschlagen.

Der vorliegenden Erfindung lag somit die Aufgabe zugrunde, ein Verfahren zur Herstellung von 9,10-Dihydro-9-oxa-10-organylphosphaphenanthren-10-oxid und Derivaten desselben, die für die Verwendung als Flammschutzmittel geeignet sind, zur Verfügung zu stellen, das die oben genannten Nachteile des Standes der Technik vermeidet. Insbesondere sollte das Verfahren von kommerziell leicht erhältlichem DOP bzw. Derivaten desselben ausgehen und einen möglichst einfachen und kostengünstigen sowie möglichst halogenfreien Syntheseweg liefern.

Diese Aufgaben werden durch die in den unabhängigen Patentansprüchen bezeichneten Ausführungsformen der Erfindung gelöst. Bevorzugte Ausführungsformen ergeben sich aus den abhängigen Ansprüchen.

Die vorliegende Erfindung liefert somit ein Verfahren zur Herstellung von 9,10-Dihydro-9-oxa-10-organylphosphaphenanthren-10-oxid und an den Phenylgruppen substituierten Derivaten desselben, wie in Anspruch 1 definiert.

Soweit in dieser Anmeldung von ein- oder mehrwertigen Molekülresten die Rede ist, z.B. ein- oder mehrwertige Kohlenwasserstoffreste, ist damit die Bindungswertigkeit dieser Molekülreste gemeint. In Bezug auf Alkohole bedeutet Wertigkeit die Zahl der OH-Gruppen des Alkohols. Diese können ferner mono-, di-, tri-, tetra- oder polyfunktionell sein, d.h. unterschiedliche funktionelle Gruppen aufweisen. Siehe zum Beispiel Römpp Chemie-Lexikon, 9. Auflage, Band 1, 1989, Seite 106, Eintrag "Alkohole"; Seite 417, Einträge "Bindigkeit" bzw. "Bindungswertigkeit". Siehe ferner Fresenius, Görlitzer, Organisch-chemische Nomenklatur, Wissenschaftliche Verlagsgesellschaft mbH, Stuttgart 1989, Seiten 11, 28 bis 32.

Das erfindungsgemäße Verfahren hat insbesondere den Vorteil, dass es in Form einer Eintopfsynthese, d.h. in einem einzigen Reaktionsgefäß, mit ausgezeichneten Ausbeuten ohne aufwendige Reinigungsoperationen zwischen den Reaktionsstufen durchgeführt werden kann. Man erhält das gewünschte Produkt in einer Reinheit von über 90 % nach Gaschromatographie. Insbesondere kann auf die Feindestillation zur Produktreinigung verzichtet werden.

Ferner weist das erfindungsgemäße Verfahren den Vorteil auf, dass es im Gegensatz zur klassischen Michaelis-Arbusov-Reaktion halogenfrei arbeiten kann, da halogenfreie Alkylierungsmittel wie Schwefelsäure oder Sulfonsäureester in katalytischen Mengen verwendet werden.

Die Ausführungsform der Erfindung, bei der mehrwertige Alkohole verwendet werden, ermöglicht die Darstellung von mehrwertigen ("verbrückten") Derivaten, die bei der anschließenden Verwendung als Flammschutzmittel in polymeren Netzwerken vorteilhafter als nicht-verbrückte Derivate in die Polymere eingebunden werden können und eine verbesserte Flammschutzwirkung aufweisen können.

Bei der halogenfreien Durchführung des Verfahrens wird Salzsäure allenfalls als Katalysator in den Reaktionsstufen (a) und/oder (b) verwendet. Im Rahmen der Entfernung von überschüssigem Alkohol kann die Salzsäure zudem wiedergewonnen werden, wodurch der Anfall von Halogenidabfällen vollständig vermieden wird.

Bei Einsatz saurer Harze als Katalysatoren ist ferner eine kontinuierliche verfahrensführung möglich. Dabei kann die kontinuierlich durchgeführte, mehrstufige Reaktion in einem Reaktionsgefäß durchgeführt werden, im Gegensatz zu den Verfahren des Standes der Technik, die im Allgemeinen mehrere separate, d.h. räumlich getrennte, aufwendigere Reaktionen ausgehend von zum Teil nicht industriell in großem Maßstab verfügbaren Edukten erfordern.

Weitere Katalysatoren, die erfindungsgemäß verwendet werden können, sind organische Sulfonsäuren, z.B. p-Toluolsulfonsäure, die ein bevorzugter Katalysator ist.

Als Edukt in Stufe (a) des erfindungsgemäßen Verfahrens wird also DOP oder ein Derivat desselben gemäß den Formeln Ia oder Ib 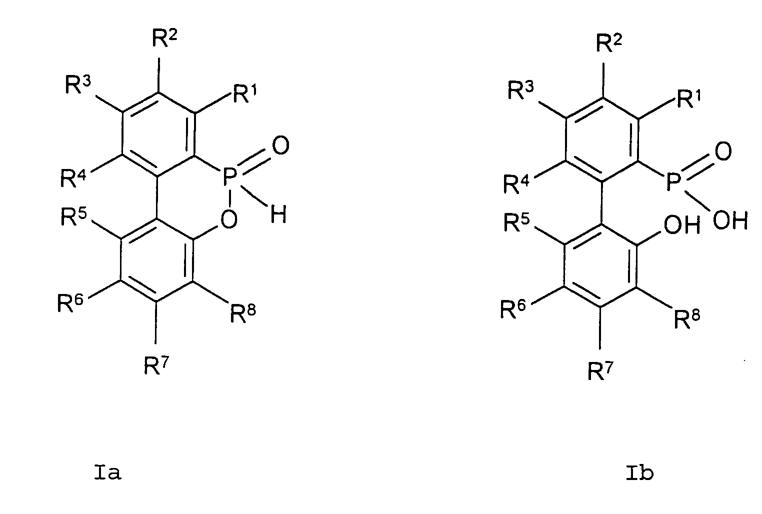 verwendet, worin R¹ bis R⁸ unabhängig voneinander ein Wasserstoffatom, Halogenatom oder eine Kohlenwasserstoffgruppe sind, wobei die Kohlenwasserstoffgruppen gegebenenfalls ein oder mehrere Heteroatome ausgewählt aus Sauerstoff, Stickstoff, Schwefel, Phosphor, Silicium und Halogen enthalten, und zwei oder mehr der Reste R¹ bis R⁸ gegebenenfalls unter Ausbildung von einem oder mehreren Cyclen verknüpft sind.

Es sei darauf hingewiesen, dass für die Zwecke dieser Anmeldung auch Verbindungen der Formel Ib als DOP-Derivate bezeichnet werden, obwohl sie nicht das (heteroatomhaltige) Phenanthren-Grundgerüst aufweisen, sondern (substituierte) o,o'-Hydroxybiphenylphosphinsäuren sind.

In den Formeln Ia/b können die Reste R¹ bis R⁸ unabhängig voneinander die folgenden Bedeutungen haben:
Alkoxy: geradkettige oder verzweigte Alkylgruppen mit 1 bis 30 Kohlenstoffatomen (wie vorstehend genannt), welche über ein Sauerstoffatom (-O-) an das Gerüst, d.h. die 9,10-Dihydro-9-oxa-10-phosphaphenanthren-10-oxid-Struktur, gebunden sind.
Alkylthio: geradkettige oder verzweigte Alkylgruppen mit 1 bis 30 Kohlenstoffatomen (wie vorstehend genannt), welche über ein Schwefelatom (-S-) an das Gerüst gebunden sind.

Gegebenenfalls substituiertes Alkyl: gesättigte, geradkettige oder verzweigte Kohlenwasserstoffreste, insbesondere mit 1 bis 10 Kohlenstoffatomen, z.B. C₁- bis C₆-Alkyl wie Methyl, Ethyl, Propyl, 1-Methylethyl, Butyl, 1-Methylpropyl, 2-Methylpropyl, 1,1-Dimethylethyl, Pentyl, 1-Methylbutyl, 2-Methylbutyl, 3-Methylbutyl, 2,2-Dimethylpropyl, 1-Ethylpropyl, Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Etylbutyl, 2-Etylbutyl, 1,3-Trimethylpropyl, 1,2,2-Trimethylpropyl, 1-Ethyl-1-methylpropyl und 1-Ethyl--2-methylpropyl.

Gegebenenfalls substituiertes Alkenyl: gesättigte, geradkettige oder verzweigte Kohlenwasserstoffreste, insbesondere mit 2 bis 10 Kohlenwasserstoffatomen und einer Doppelbindung in einer beliebigen Position, z.B. C₂- bis C₆-Alkenyl wie Ethenyl, 1-Propenyl, 2-Propenyl, 1-Methylethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 1,1,2-Trimethyl-2-propenyl, 1-Ethyl-1-methyl-2-propenyl, 1-Ethyl-2-methyl-2-propenyl und 1-Ethyl-2-methyl-2-propenyl.

Gegebenenfalls substituiertes Alkinyl: geradkettige oder verzweigte Kohlenwasserstoffgruppen, insbesondere mit 2 bis 20 Kohlenwasserstoffatomen und einer Dreifachbindung in einer beliebigen Position, z.B. C₂- bis C₆-Alkinyl wie Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl und 1-Ethyl-1-methyl-2-propinyl.

Ein gegebenenfalls substituierter, gesättigter oder ein-oder zweifach ungesättigter Ring, welcher neben Kohlenstoffatomen ein bis drei der folgenden Heteroatome als Ringglieder enthalten kann: Sauerstoff, Schwefel und Stickstoff, beispielsweise Carbocyclen wie Cyclopropyl, Cyclopentyl, Cyclohexyl, Cyclopent-2-enyl, Cyclohex-2-enyl, 5- bis 6-gliedrige, gesättigte oder ungesättigte Heterocyclen, enthaltend ein bis drei Stickstoffatome und/oder ein Sauerstoff- oder Schwefelatom wie 2-Tetrahydrofuranyl, 3-Tetrahydrofuranyl, 2-Tetrahydrothienyl, 3-Tetrahydrothienyl, 2-Pyrrolidinyl, 3-Pyrrolidinyl, 3-Isoxazolidinyl, 4-Isoxazolidinyl, 5-Isoxazolidinyl, 3-Isothiazolidinyl, 4-Isothiazolidinyl, 5-Isothiazolidinyl, 3-Pyrazolidinyl, 4-Pyrazolidinyl, 5-Pyrazolidinyl, 2-Oxazolidinyl, 4-Oxazolidinyl, 5-Oxazolidinyl, 2-Thiazolidinyl, 4-Thiazolidinyl, 5-Thiazolidinyl, 2-Imidazolidinyl, 4-Imidazolidinyl, 1,2,4-Oxadiazolidin-3-yl, 1,2,4-Oxadiazolidin-5-yl, 1,2,4-Thiadiazolidin-3-yl, 1,2,4-Thiadiazolidin-5-yl, 1,2,4-Triazolidin-3-yl, 1,3,4-Oxadiazolidin-2-yl, 1,3,4-Thiadiazolidin-2-yl, 1,3,4-Triazolidin-2-yl, 2,3-Dihydrofur-2-yl, 2,3-Dihydrofur-3-yl, 2,4-Dihydrofur-2-yl, 2,4-Dihydrofur-3-yl, 2,3-Dihydrothien-2-yl, 2,3-Dihydrothien-3-yl, 2,4-Dihydrothien-2-yl,2,4-Dihydrothien-3-yl,2,3-Pyrrolin-2-yl, 2,3-Pyrrolin-3-yl, 2,4-Pyrrolin-2-yl, 2,4-Pyrrolin-3-yl, 2,3-Isoxazolin-3-yl, 3,4-Isoxazolin-3-yl, 4,5-Isoxazolin-3-yl, 2,3-Isoxazolin-4-yl, 3,4-Isoxazolin-4-yl, 4,5-Isoxazolin-4-yl, 2,3-Isoxazolin-5-yl, 3,4-Isoxazolin-5-yl, 4,5-Isoxazolin-5-yl, 2,3-Isothiazolin-3-yl, 3,4-Isothiazolin-3-yl, 4,5-Isothiazolin-3-yl, 2,3-Isothiazolin-4-yl, 3,4-Isothiazolin-4-yl, 4,5-Isothiazolin-4-yl, 2,3-Isothiazolin-5-yl, 3,4-Isothiazolin-5-yl, 4,5-Isothiazolin-5-yl, 2,3-Dihydropyrazol-1-yl, 2,3-Dihydropyrazol-2-yl, 2,3-Dihydropyrazol-3-yl, 2,3-Dihydropyrazol-4-yl, 2,3-Dihydropyrazol-5-yl,3,4-Dihydropyrazol-1-yl,3,4-Dihydropyrazol-3-yl, 3,4-Dihydropyrazol-4-yl, 3,4-Dihydropyrazol-5-yl, 4,5-Dihydropyrazol-1-yl, 4,5-Dihydropyrazol-3-yl, 4,5-Dihydropyrazol-4-yl, 4,5-Dihydropyrazol-5-yl, 2,3-Dihydrooxazol-2-yl, 2,3-Dihydrooxazol-3-yl, 2,3-Dihydrooxazol-4-yl, 2,3-Dihydrooxazol-5-yl, 3,4-Dihydrooxazol-2-yl, 3,4-Dihydrooxazol-3-yl, 3,4-Dihydrooxazol-4-yl, 3,4-Dihydrooxazol-5-yl, 3,4-Dihydrooxazol-2-yl, 3,4-Dihydrooxazol-3-yl, 3,4-Dihydrooxazol-4-yl, 2-Piperidinyl, 3-Piperidinyl, 4-Piperidinyl, 1,3-Dioxan-5-yl, 2-Tetrahydropyranyl, 4-Tetrahydropyranyl, 2-Tetrahydrothienyl, 3-Tetrahydropyridazinyl, 4-Tetrahydropyridazinyl, 2-Tetrahydropyrimidinyl, 4-Tetrahydropyrimidinyl, 5-Tetrahydropyrimidinyl, 2-Tetrahydropyrazinyl, 1,3,5-Tetrahydro-triazin-2-yl und 1,2,4-Tetrahydrotriazin-3-yl, vorzugsweise 2-Tetrahydrofuranyl, 2-Tetrahydrothienyl, 2-Pyrrolidinyl, 3-Isoxazolidinyl, 3-Isothiazolidinyl, 1,3,4-Oxazolidin-2-yl, 2,3-Dihydrothien-2-yl, 4,5-Isoxazolin-3-yl, 3-Piperidinyl, 1,3-Dioxan-5-yl, 4-Piperidinyl, 2-Tetrahydropyranyl, 4-Tetrahydropyranyl.

Ein gegebenenfalls substituiertes ein- oder zweikerniges aromatisches Ringsystem, welches neben Kohlenstoffatomen ein bis vier Stickstoffatome oder ein oder zwei Stickstoffatome und ein Sauerstoff- oder Schwefelatom oder ein Sauerstoff- oder Schwefelatom als Ringglieder enthalten kann, d.h. Arylreste wie Phenyl und Naphthyl, vorzugsweise Phenyl oder 1- oder 2-Naphthyl, und Hetarylreste, beispielsweise 5-Ring-Heteroaromaten enthalten ein bis drei Stickstoffatome und/oder ein Sauerstoffoder Schwefelatom wie 2-Furyl, 3-Furyl, 2-Thienyl, 3-Thienyl, 1-Pyrrolyl, 2-Pyrrolyl, 3-Pyrrolyl, 3-Isoxazolyl, 4-Isoxazolyl, 5-Isoxazolyl, 3-Isothiazolyl, 4-Isothiazolyl, 5-Isothiazolyl, 1-Pyrazolyl, 3-Pyrazolyl, 4-Pyrazolyl, 5-Pyrazolyl, 2-Oxazolyl, 4-Oxazolyl, 5-Oxazolyl, 2-Thiazolyl, 4-Thiazolyl, 5-Thiazolyl, 1-Imidazolyl, 2-Imidazolyl, 4-Imidazolyl, 1,2,4-Oxadiazol-3-yl, 1,2,4-Oxadiazol-5-yl, 1,2,4-Thiadiazol-3-yl, 1,2,4-Thiadiazol-5-yl, 1,2,5-Triazol-3-yl, 1,2,3-Triazol-4-yl, 1,2,3-Triazol-5-yl, 5-Tetrazolyl, 1,2,3,4-Thiatriazol und 1,2,3,4-Oxatriazol-5-yl, insbesondere 3-Isoxazolyl, 5-Isoxazolyl, 4-Oxazolyl, 4-Thiazolyl, 1,3,4-Oxadiazol-2-yl und 1,3,4-Thiadiazol-2-yl.

Sechsring-Heteroaromaten enthaltend ein bis vier Stickstoffatome als Heteroatome wie 2-Pyridinyl, 3-Pyridinyl, 4-Pyridinyl, 3-Pyradazinyl, 4-Pyradazinyl, 2-Pyrimidinyl, 4-Pyrimidinyl, 5-Pyrimidinyl, 2-Pyrazinyl, 1,3,5-Triazin-2-yl, 1,2,4-Triazin-3-yl und 1,2,4,5-Tetrazin-3-yl, insbesondere 2-Pyridinyl, 3-Pyridinyl, 4-Pyridinyl, 2-Pyrimidinyl, 4-Pyrimidinyl, 2-Pyrazinyl und 4-Pyrazinyl.

Der Zusatz "gegebenenfalls substituiert" in Bezug auf Alkyl-, Alkenyl- und Alkinylgruppen soll zum Ausdruck bringen, dass diese Gruppen partiell oder vollständig halogeniert sein können (d.h. die Wasserstoffatome dieser Gruppen können teilweise oder vollständig durch gleiche oder verschiedene Halogenatome wie vorstehend genannt (vorzugsweise Fluor, Chor und Brom, insbesondere Fluor und Chlor) ersetzt sein können und/oder einen bis drei, insbesondere einen der folgenden Reste tragen können:

Nitro, Cyano, C₁- bis C₄-Alkoxy, C₁- bis C₄-Alkoxycarbonyl oder ein gegebenenfalls substituiertes ein- oder zweikerniges aromatisches Ringsystem, welches neben Kohlenstoffatomen ein bis vier Stickstoffatome oder ein oder zwei Stickstoffatome und ein Sauerstoff- oder Schwefelatom oder ein Sauerstoff- oder Schwefelatom als Ringglieder enthalten kann, d.h. Arylreste wie Phenyl und Naphthyl, vorzugsweise Phenyl oder 1- oder 2-Naphthyl, und Hetarylreste, beispielsweise 5-Ring-Heteroaromaten enthalten ein bis drei Stickstoffatome und/oder ein Sauerstoffoder Schwefelatom wie 2-Furyl, 3-Furyl, 2-Thienyl, 3-Thienyl, 1-Pyrrolyl, 2-Pyrrolyl, 3-Pyrrolyl, 3-Isoxazolyl, 4-Isoxazolyl, 5-Isoxazolyl, 3-Isothiazolyl, 4-Isothiazolyl, 5-Isothiazolyl, 1-Pyrazolyl, 3-Pyrazolyl, 4-Pyrazolyl, 5-Pyrazolyl, 2-Oxazolyl, 4-Oxazolyl, 5-Oxazolyl, 2-Thiazolyl, 4-Thiazolyl, 5-Thiazolyl, 1-Imidazolyl, 2-Imidazolyl, 4-Imidazolyl, 1,2,4-Oxadiazol-3-yl, 1,2,4-Oxadiazol-5-yl, 1,2,4-Thiadiazol-3-yl, 1,2,4-Thiadiazol-5-yl, 1,2,5-Triazol-3-yl, 1,2,3-Triazol-4-yl, 1,2,3-Triazol-5-yl, 5-Tetrazolyl, 1,2,3,4-Thiatriazol und 1,2,3,4-Oxatriazol-5-yl, insbesondere 3-Isoxazolyl, 5-Isoxazolyl, 4-Oxazolyl, 4-Thiazolyl, 1,3,4-Oxadiazol-2-yl und 1,3,4-Thiadiazol-2-yl.

Ferner können die Substituenten Sechsring-Heteroaromaten sein enthaltend ein bis vier Stickstoffatome als Heteroatome wie 2-Pyridinyl, 3-Pyridinyl, 4-Pyridinyl, 3-Pyradazinyl, 4-Pyradazinyl, 2-Pyrimidinyl, 4-Pyrimidinyl, 5-Pyrimidinyl, 2-Pyrazinyl, 1,3,5-Triazin-2-yl, 1,2,4-Triazin-3-yl und 1,2,4,5-Tetrazin-3-yl, insbesondere 2-Pyridinyl, 3-Pyridinyl, 4-Pyridinyl, 2-Pyrimidinyl, 4-Pyrimidinyl, 2-Pyrazinyl und 4-Pyrazinyl.

Der Zusatz "gegebenenfalls substituiert" in Bezug auf die cyclischen (gesättigten, ungesättigten oder aromatischen) Gruppen soll zum Ausdruck bringen, dass diese Gruppen partiell oder vollständig halogeniert sein können (d.h. die Wasserstoffatome dieser Gruppen können teilweise oder vollständig durch gleiche oder verschiedene Halogenatome wie vorstehend genannt (vorzugsweise Fluor, Chor und Brom, insbesondere Fluor und Chlor) ersetzt sein können) und/oder einen bis drei, vorzugsweise einen der folgenden Reste tragen können: Nitro, Cyano, C₁- bis C₄-Alkyl, C₁- bis C₄-Alkoxy und C₁- bis C₄-Alkoxycarbonyl.

Die bei den Resten genannten ein- oder zweikernigen aromatischen oder heteroaromatischen Systeme können ihrerseits partiell oder vollständig halogeniert sein, d.h. die Wasserstoffatome dieser Gruppen können partiell oder vollständig durch Halogenatome wie Fluor, Chlor, Brom und Iod, vorzugsweise Fluor und Chlor ersetzt sein.

Diese ein- oder zweikernigen aromatischen oder heteroaromatischen Systeme können neben den bezeichneten Halogenatomen zusätzlich ein bis drei der folgenden Substituenten tragen:
Nitro, Cyano, Thiocyanato;
Alkyl, insbesondere C₁- bis C₆-Alkyl wie vorstehend genannt,
C₁- bis C₃₀-Alkoxy,
C₁- bis C₃₀-Alkylthio,
C₁- bis C₄-Alkylamino,
C₁- bis C₆-Alkylcarbonyl,
C₁- bis C₆-Alkoxycarbonyl,
C₁- bis C₆-Alkylaminocarbonyl,
C₁- bis C₆-Alkylcarboxyl,
C₁- bis C₆-Alkylcarbonylamino,
C₃- bis C₇-Cycloalkyl wie Cyclopropyl, Cyclobutyl, Cyclopentyl, Cyclohexyl und Cycloheptyl, vorzugsweise Cyclopropyl, Cyclopentyl und Cyclohexyl, insbesondere Cyclopropyl;
C₃- bis C₇-Cycloalkoxy wie Cyclopropyloxy, Cyclobutyloxy, Cyclopentyloxy, Cyclohexyloxy und Cycloheptyloxy, vorzugsweise Cyclopentyloxy und Cyclohexyloxy, insbesondere Cyclohexyloxy;
C₃- bis C₇-Cycloalkylthio wie Cyclopropylthio, Cyclobutylthio, Cyclopentylthio, Cyclohexylthio und Cycloheptylthio, vorzugsweise Cyclohexylthio;
C₃- bis C₇-Cycloalkylamino wie Cyclopropylamino, Cyclobutylamino, Cyclopentylamino, Cyclohexylamino und Cycloheptylamino, vorzugsweise Cyclopropylamino und Cyclohexylamino, insbesondere Cyclopropylamino;
weitere Reste für gegebenenfalls substituierte ein- oder zweikernige aromatische oder heteroaromatische Reste:
Alkenyl, Alkinyl, Halogenalkenyl, Halogenalkinyl, Alkenyloxy, Alkinyloxy, Halogenalkenyloxy, Halogenalkinyloxy, Alkenylthio, Alkinylthio, Alkylsulfoxy, Alkylsulfonyl, Alkenylsulfoxy, Alkinylsulfoxy, Alkinylsulfonyl.

Obwohl die Reste R¹ bis R⁸ Halogen sein können, wie Fluor, Chlor, Brom oder Iod, vorzugsweise Chlor oder Brom, sind Derivate bevorzugt, bei denen keiner der Reste R¹ bis R⁸ ein Halogenatom ist. Entsprechend sind Derivate bevorzugt, bei denen keiner der Reste R¹ bis R¹¹ Halogenatome aufweist, wobei R⁹ bis R¹¹ wie nachfolgend definiert sind. Halogenfreie Derivate sind also erfindungsgemäß bevorzugt.

Obwohl ein Substitutionsmuster möglich ist, bei dem alle Reste R¹, R², R³ und R⁴ unabhängig voneinander ein Halogenatom oder eine Kohlenwasserstoffgruppe sind, betrifft eine bevorzugte Ausführungsform den Fall, dass von den Resten R¹, R², R³ und R⁴ mindestens zwei, vorzugsweise mindestens drei Wasserstoffatome sind, wobei insbesondere R¹, R², R³ und R⁴ alle Wasserstoffatome sind.

Obwohl ein Substitutionsmuster möglich ist, bei dem alle Reste R⁵, R⁶, R⁷ und R⁸ unabhängig voneinander ein Halogenatom oder eine Kohlenwasserstoffgruppe sind, betrifft eine bevorzugte Ausführungsform den Fall, dass von den Resten R⁵, R⁶, R⁷ und R⁸ mindestens zwei, vorzugsweise mindestens drei Wasserstoffatome sind, wobei insbesondere R⁵, R⁶, R⁷ und R⁸ alle Wasserstoffatome sind.

Dabei sind Substitutionsmuster an den aromatischen Ringsystemen bevorzugt, bei denen jeweils zwei der Reste R¹, R², R³ und R⁴ und der Reste R⁵, R⁶, R⁷ und R⁸ ein Halogenatom oder eine Kohlenwasserstoffgruppe sind, wobei bevorzugter nur jeweils einer der Reste R¹, R², R³ und R⁴ und der Reste R⁵, R⁶, R⁷ und R⁸ ein Halogenatom oder eine Kohlenwasserstoffgruppe ist und insbesondere alle Reste R¹ bis R⁸ Wasserstoffatome sind.

Für die im vorhergehenden Absatz beschriebenen bevorzugten Ausführungsformen sind C₁- bis C₆-Alklgruppen als Kohlenwasserstoffgruppen bevorzugt. Falls die Kohlenwasserstoffgruppen ein Heteroatom enthalten, sind C₁- bis C₆-Alkoxygruppen die bevorzugten Reste für diese Ausführungsformen. Das Heteroatom ist dann also Sauerstoff.

In Stufe (a) der erfindungsgemäßen Reaktion wird also DOP oder ein Derivat desselben, insbesondere ein Derivat gemäß den obigen Formeln Ia oder Ib, in Gegenwart von mindestens einem ein- oder mehrwertigen Alkohol mit mindestens einem Orthocarbonsäureester umgesetzt, wobei sich ein erstes Zwischenprodukt bildet.

Erfindungsgemäß wird in Stufe (a) ein Orthocarbonsäureester der Formel II

R⁹C(OR¹⁰)₃ (II)

verwendet, in der R⁹ ein Wasserstoffatom oder eine Kohlenwasserstoffgruppe ist und die Reste R¹⁰ gleiche oder unterschiedliche Kohlenwasserstoffgruppen sind, die gegebenenfalls ein oder mehrere Heteroatome ausgewählt aus Sauerstoff, Stickstoff, Schwefel, Phosphor, Silicium und Halogen enthalten.

Erfindungsgemäß wird in Stufe (a) ein Alkohol der Formel IIIa

R¹¹(OH)_{y} (IIIa)

verwendet, in der R¹¹ eine ein- oder mehrwertige Kohlenwasserstoffgruppe ist, die gegebenenfalls ein oder mehrere Heteroatome ausgewählt aus Sauerstoff, Stickstoff, Schwefel, Phosphor, Silicium und Halogen enthält, und y von 1 bis 10, vorzugsweise 1 bis 4, insbesondere 1, 2, 3 oder 4 beträgt.

In einer bevorzugten Ausführungsform ist R⁹ ein Wasserstoffatom, eine Alkyl- oder eine Arylgruppe, wobei die Begriffsdefinitionen zu den Resten R¹ bis R⁸ entsprechend gelten, und ein Wasserstoffatom oder eine Methylgruppe sind besonders bevorzugt.

Bevorzugte Reste R¹⁰ und R¹¹ sind unabhängig voneinander ausgewählt aus Alkyl-, Alkenyl-, Alkinyl-, Aryl- und Glycidylgruppen, wobei die Begriffsdefinitionen zu den Resten R¹ bis R⁸ entsprechend gelten, und Methyl, Ethyl und Allyl sind besonders bevorzugt. In einer weiteren bevorzugten Ausführungsform sind die Reste R¹⁰ und R¹¹ gleich. Weitere Beispiele für die Reste R¹⁰ und R¹¹ sind die oben in Bezug auf die Definitionen von R¹ bis R⁸ aufgelisteten, gegebenenfalls substituierten Alkyl-, Alkenylund Alkinylreste sowie die oben genannten, gegebenenfalls substituierten, gesättigten oder ein- oder zweifach ungesättigten Ringe.

Als Orthocarbonsäureester sind Orthoameisensäureester, insbesondere Trimethylorthoformiat, Triethylorthoformiat oder Triallylorthoformiat bevorzugt. Es können aber auch Orthocarbonsäureester verwendet werden, bei denen die Reste R¹⁰ verschieden sind.

Als Alkohole sind insbesondere Methanol, Ethanol, Propanol, Isopropanol und Butanol bevorzugt. Als mehrwertige Alkohole sind Diole, Glykole, Polyglykole, drei- und vierwertige Alkohole, z.B. Ethylenglykol, Glycerin und Pentaerythrit bevorzugt.

Weitere Beispiele für zwei-, drei- oder vierwertige Alkohole sind im Folgenden aufgeführt.

Beispiele für zweiwertige Reste in Alkoholen der Formel R¹¹(OH)₂ sind:
(CH₂)ₙ, (CH₂)ₙO(CH₂)ₘ, (CH₂)ₙNR(CH₂)ₘ, (CH₂)ₙN(COR) (CH₂)ₘ, (CH₂)ₙS (CH₂)ₘ, OPR (OCH₂CH₂)₂, (CH₂)ₙOOC∼∼COO (CH₂)ₘ, (CH₂)ₙX∼∼X(CH₂)ₘ, 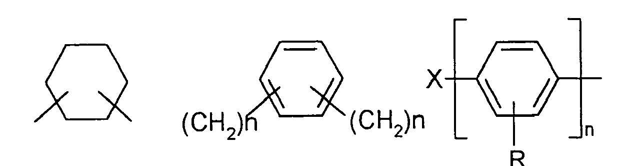 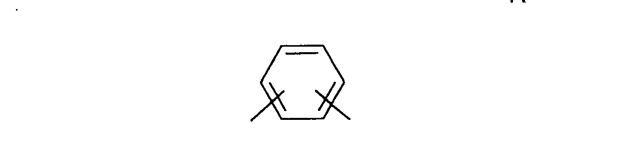 mit X = (CR₂)ₘ, SO₂, SO, S, O, NR, OPR und R = H oder Alkyl und (COR) = Acyl; ∼∼ = aliphatische, cycloaliphatische oder aromatische Brücken; m,n sind jeweils ganze Zahlen und 1 oder größer, vorzugsweise 1 bis 10, 1 bis 5 oder 1 bis 3, z.B. 2 oder 4.

Beispiele für dreiwertige Reste in Alkoholen der Formel R¹¹(OH)₃ sind:

RC(CH₂)₁(CH₂)ₘ(CH₂)ₙ

RSi (OCH₂CH₂)₃

B (OCH₂CH₂)₃

O=P (CH₂CH₂)₃

OP(OCH₂CH₂)₃

N(CH₂)₁(CH₂)ₘ(CH₂)ₙ

M(COO(CH₂)₁) (COO(CH₂)ₘ) (COO(CH₂)ₙ)

Ether dreiwertiger Alkohole, z.B. Triether von Glycerin oder 1,1,1-Tris(hydroxymethyl)propan 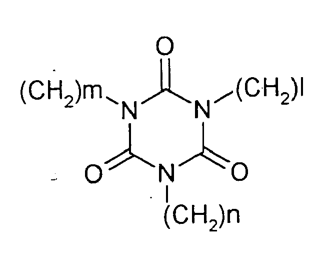 wobei R, m, n wie oben für die zweiwertigen Reste definiert sind und 1 wie m und n definiert ist und M ein dreiwertiger Kohlenwasserstoffrest ist und die Estergruppen an demselben oder verschiedenen C-Atomen angeordnet sind.

Beispiele für vierwertige Reste in Alkoholen der Formel R¹¹(OH)₄ sind:

C(CH₂)₁(CH₂)ₘ(CH₂)ₙ(CH₂)ₒ

Si(OCH₂CH₂)₄

M'(COO(CH₂)₁)(COO(CH₂)ₘ)(COO(CH₂)ₙ)(COO(CH₂)ₒ)

(CH₂)ₙ(CH₂)ₒNOC∼∼CON(CH₂)ₗ(CH₂)ₘ,

(CH₂)ₙ(CH₂)ₒN-∼∼-N(CH₂)ₗ(CH₂)ₘ,

wobei -- R, 1, m, n wie oben für die dreiwertigen Reste definiert sind und o wie 1, m, n definiert ist und M' ein vierwertiger Kohlenwasserstoffrest ist und die Estergruppen an demselben oder verschiedenen C-Atomen angeordnet sind.

Das nach den oben beschriebenen bevorzugten Ausführungsformen der Erfindung in Stufe (a) erhaltene Zwischenprodukt lässt sich durch die folgenden Formeln IVa oder IVb beschreiben: 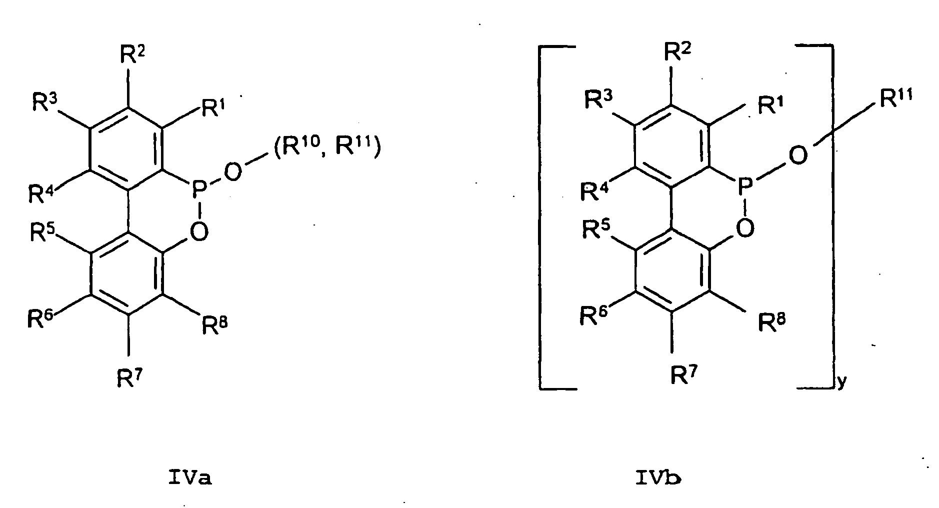 worin die Reste R¹ bis R¹¹ und y die oben angegebenen Bedeutungen haben.

Reaktionsstufe (a) kann erfindungsgemäß ohne weitere Lösungsmittel durchgeführt werden. Falls ein Lösungsmittel verwendet wird, kann dies Benzol, alkylierte Benzole, aliphatische oder cycloaliphatische Ether sein. Im Allgemeinen wird die Reaktion bei Temperaturen von -20 °C bis 120 °C, vorzugsweise 0 °C bis 100°C, insbesondere 5 °C bis 8 °C durchgeführt. Reaktionsstufe (a) kann bei Normaldruck oder leichtem Überdruck durchgeführt werden.

Insbesondere wenn die Bildung von Produktmischungen vermieden werden soll, kann erfindungsgemäß in Reaktionsstufe (b) das Zwischenprodukt aus Stufe (a) mit mindestens einem weiteren ein-oder mehrwertigen Alkohol unter Bildung eines weiteren Zwischenprodukts umgesetzt werden. Der dabei verwendete Alkohol hat erfindungsgemäß die Formel IIIb

R¹²(OH)_{y} (IIIb),

in der R¹² eine ein- oder mehrwertige Kohlenwasserstoffgruppe ist, die gegebenenfalls ein oder mehrere Heteroatome ausgewählt aus Sauerstoff, Stickstoff, Schwefel, Phosphor, Silicium und Halogen enthält, und y von 1 bis 10, vorzugsweise 1 bis 4, insbesondere 1, 2, 3 oder 4 beträgt, und der von dem in Stufe (a) verwendeten Alkohol verschieden ist.

In Bezug auf bevorzugte Reste R¹² wird auf die obigen Definitionen zu R¹¹ verwiesen. Diese gelten auch für R¹².

Insbesondere sind die folgenden Ausführungsformen des erfindungsgemäßen Verfahrens möglich:

Sowohl in Stufe (a) als auch in Stufe (b) wird ein einwertiger Alkohol verwendet (y = 1).

In Stufe (a) wird ein einwertiger Alkohol (y = 1) eingesetzt und in Stufe (b) wird ein mehrwertiger Alkohol (y = 2 bis 4) eingesetzt.

Sowohl in Stufe (a) als auch in Stufe (b) wird ein mehrwertiger Alkohol eingesetzt (y = 2 bis 4).

In Stufe (a) wird ein mehrwertiger Alkohol (y = 2 bis 4) eingesetzt, während in Stufe (b) ein einwertiger Alkohol (y = 1) eingesetzt wird.

Die Umsetzung mit mindestens einem weiteren Alkohol in Stufe (b) des erfindungsgemäßen Verfahrens hat den vorteil, dass man in Stufe (a) preisgünstige Orthocarbonsäureester einsetzen kann, was für den Fall, dass R¹⁰ ungleich R¹¹ ist, zu einem Produktgemisch führt. Durch Umesterung mit einem weiteren Alkohol in Stufe (b) kann dann, falls gewünscht, ein einheitliches Produkt erhalten werden.

Vorzugsweise werden die Reaktionsstufen (a) und (b) in Gegenwart von Katalysatoren durchgeführt. Dies können beispielsweise Lewis-Säuren oder Bronsted-Säuren sein. Insbesondere sind Halogenwasserstoffe, Phosphorsäuren, Schwefelsäuren, insbesondere organische Sulfonsäuren und dergleichen geeignet. Besonders bevorzugt ist Salzsäure oder p-Toluolsulfonsäure. Der oder die Katalysatoren werden vorzugsweise wiedergewonnen.

Die nach Stufe (b) erhaltenen Produkte können durch die Formeln Va oder Vb 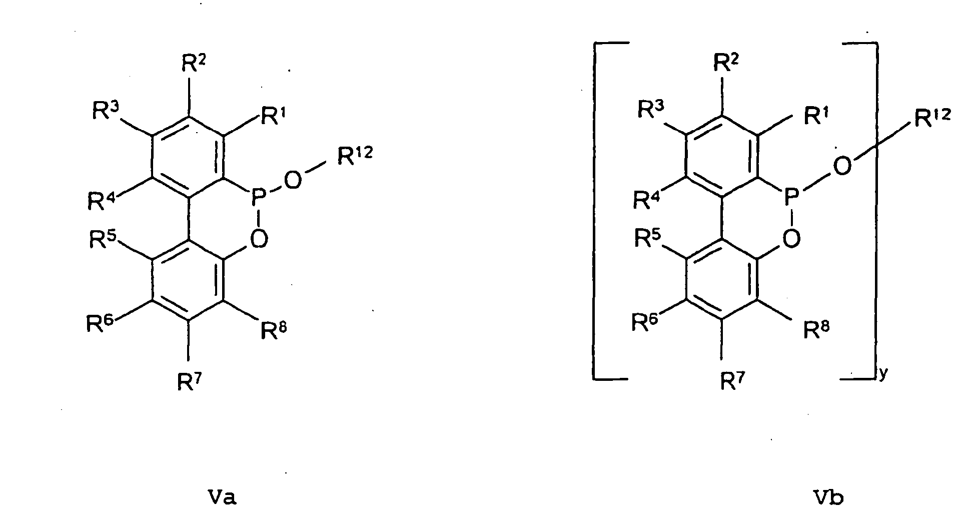 beschrieben werden, worin die Reste R¹ bis R¹² die oben angegebenen Bedeutungen haben.

Nach dem Ende der Reaktionen (a) und/oder (b) wird überschüssiger Alkohol sowie flüchtige Edukte (Orthocarbonsäureester) abdestilliert, z.B. mit Hilfe eines Rotationsverdampfers. Der undestillierte Rückstand, d.h. die Produkte gemäß den Formeln IVa oder IVb bzw. Va oder Vb, kann dann lösungsmittelfrei intramolekular unter Zugabe katalytischer Mengen Alkylierungsmittel umgelagert werden, was vorzugsweise bei erhöhten Temperaturen von über 100 °C und unter Normaldruck erfolgt. Falls gewünscht, kann zusätzlich ein oder mehrere Lösungsmittel hinzugegeben werden, z.B. Xylole, DMF (Dimethylformamid) oder NMP (N-Methylpyrrolidon).

In Stufe (c) des erfindungsgemäßen Verfahrens wird dem Zwischenprodukt aus den Stufen (a) oder (b) halogenfreie(s) Alkylierungsmittel in katalytischen Mengen von insbesondere 0,1-100 mmol/mol zugesetzt, in dessen Gegenwart sich das bezogen auf Phosphor dreibindige Zwischenprodukt in eine fünfbindige Phosphorverbindung umwandelt. Als Alkylierungsmittel können Alkylsulfate, Alkylsulfonate, Alkyl-p-toluolsulfonate, Alkylsulfinate, Alkylfluoroborate, Alkyltrifluormethansulfonate, Trialkyloxoniumsalze, Alkylmaleimide, Lactone, Lactame, Sulfone, Salze von Mannich-Basen und Carbonsäureanhydride verwendet werden. Bevorzugt sind Alkylsulfonate aromatischer Sulfonsäuren wie Alkyl-p-tolylsulfonate, z.B. p-Toluolsulfonsäureethylester, oder Alkylsulfate wie Dimethylsulfat.

Nach der katalytischen Umsetzung in Stufe (c) werden gegebenenfalls flüchtige Bestandteile im Allgemeinen durch Destillation, gegebenenfalls unter reduziertem Druck oder Vakuum, entfernt, und so das Produkt erhalten. Als abschließendes Reinigungsverfahren kann ein Waschen mit Wasser oder einem Gemisch aus Wasser und Säure erfolgen, um so Katalysatorrückstände und möglicherweise nicht-umgesetztes Edukt (DOP) zu entfernen. Die dabei erhaltene Reinheit des Produkts ist so, dass es ohne weiteres in technischen Anwendungen wie als Flammschutzmittel verwendet werden kann, ohne dass weitere Reinigungs- oder Aufarbeitungsschritte erforderlich sind.

Die unter Einsatz der oben beschriebenen bevorzugten Reaktionskomponenten erhaltenen Produkte lassen sich durch die Formeln VIa oder VIb 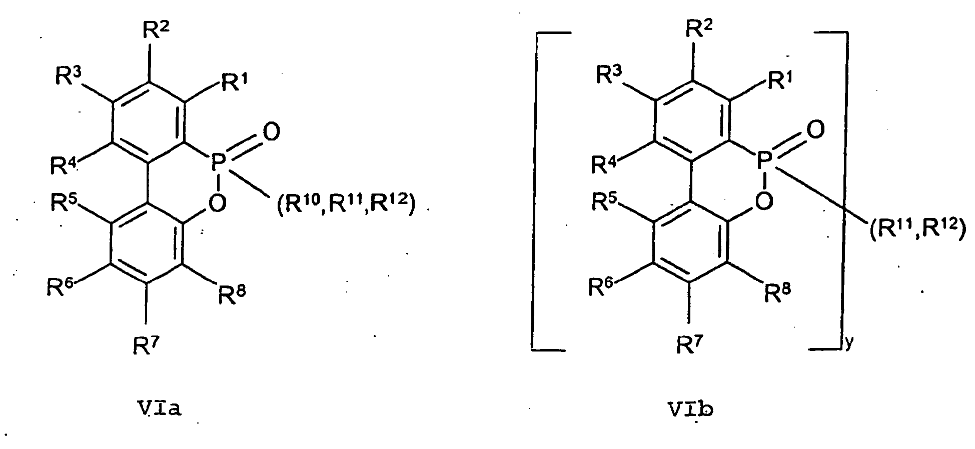 beschreiben, worin R¹ bis R¹² und y die oben angegebenen Bedeutungen haben. Vorzugsweise sind die Reste R¹ bis R⁸ Wasserstoff, der Rest R¹⁰ Methyl oder Ethyl und die Reste R¹¹ oder R¹² Methyl, Methylen, Methantriyl oder Methantetrayl, Ethyl, Ethylen, Ethantriyl oder Ethantetrayl.

Die Schreibweise (R¹⁰,R") bzw. (R¹⁰, R¹¹, R¹²) bzw. (R¹¹, R¹²) in den Formeln Va/b und VIa/b ist eine abgekürzte Schreibweise für mehrere Alternativen, bei denen jeweils einer der in den Klammerausdrücken aufgezählten Reste vorhanden ist, während die übrigen Reste nicht vorhanden sind.

Die Erfindung betrifft ferner ein Verfahren zur Herstellung von flammhemmend ausgerüsteten Natur- und Kunststoffen, bei dem einem Natur- oder Kunststoff ein oder mehrere erfindungsgemäße Derivate zugesetzt werden.

Das Verfahren ist dadurch gekennzeichnet, dass als Zwischenprodukte zunächst gemäß dem obigen Verfahren 9,10-Dihydro-9-oxa-10-organylphosphaphenanthren-10-oxid oder an den Phenylgruppen substituierten Derivate desselben hergestellt werden und diese Zwischenprodukte dann in den Natur- oder Kunststoff eingebracht werden.

Die Zwischenprodukte können auf additive oder reaktive Weise in den Natur- oder Kunststoff eingebracht werden. Insbesondere bei den mittels mehrwertiger Alkohole hergestellten DOP-Derivaten ist die reaktive Einbringung, d.h. die Einbindung in den Naturoder Kunststoff mittels einer chemischen Reaktion eine vorteilhafte Variante.

Alternativ können einem ungehärteten Natur- oder Kunststoff (Kunstharz) ein oder mehrere der erfindungsgemäß hergestellten Derivate zugesetzt werden und die Mischung aus ungehärtetem Natur- oder Kunststoff und erfindungsgemäßem Derivat kann dann zu einem flammhemmend ausgerüsteten, gehärteten Natur- oder Kunststoff gehärtet werden.

Kunststoffe sind vorzugsweise ausgewählt aus der Gruppe bestehend aus Polyester, Polyamid, Polycarbonat, Polystyrol, Polyethylen, Polypropylen, Phenol- und Epoxidharzen, insbesondere Phenol- und Epoxidharze. Naturstoffe sind vorzugsweise ausgewählt aus Baumwolle, Wolle, Leinen und Hanf.

Ein erfindungsgemäß hergestelltes flammfestes Epoxidharz enthält vorzugsweise 2 bis 7 Gew.-% Phosphor in der Harzmasse. Dabei ist unter "Harzmasse" nur das Gesamtgewicht von eingesetztem Epoxidharz und erfindungsgemäßem Derivat der Formel VI a/b zu verstehen. Weitere gegebenenfalls eingesetzte Komponenten wie Härter, Füllstoff oder Glasfasermatte bleiben bei dieser Bestimmung des Phosphorgehalts außer Betracht. Ein Vorteil des erfindungsgemäß flammfest ausgerüsteten Epoxidharzes besteht darin, dass es unter Verwendung eines reaktiven Derivats (z.B. R¹⁰ und/oder R¹¹ gleich Allyl oder Glycidyl) hergestellt werden kann. Mindestens ein Teil des reaktiven Derivats der Formel I reagiert dann mit dem Epoxidharz und/oder dem gegebenenfalls eingesetzten Härter. Es ist erfindungsgemäß bevorzugt, dass mindestens 50 Gew.-% des Phosphorgehalts chemisch in das Epoxidharz eingebunden sind.

Bevorzugte Ausführungsformen und Vorteile der vorliegenden Erfindung ergeben sich insbesondere aus den Beispielen.

Die folgenden Beispiele 1 bis 4 illustrieren die Reaktionsstufe (a) des erfindungsgemäßen Verfahrens:

### Beispiel 1

### 9,10-Dihydro-9-oxa-10-methoxyphosphaphenanthren(6-Methoxy-(6H)-dibenz[c,e] [1,2]-oxaphosphorin) aus DOP und Trimethylorthoformiat in Methanol

1,33 mol (287,5 g) DOP und 2,5 ml konz. HCl wurden in 1230 ml Methanol gelöst und die Mischung wurde auf 85 °C zum Rückfluss erhitzt (leichter Überdruck). Nach 45 min wurden weitere 0,5 ml konz. HCl zugegeben und anschließend innerhalb von 5 h, 2,7 mol (295 ml) Trimethylorthoformiat zugetropft. Während des Zutropfens des Trimethylorthoformiats wurden alle 30 min jeweils 0,5 ml konz. HCl zugefügt. Nach Beendigung der Reaktion wurden alle flüchtigen Bestandteile am Rotationsverdampfer unter reduziertem Druck entfernt. Der gelbe, ölige Rückstand wurde im Feinvakuum (0,1 mbar) destilliert. Bei 130 bis 155 °C destillierte das Produkt als farblose, ölige Flüssigkeit, welche langsam nach mehreren Wochen erstarrt. Ausbeute: 265 g, 87 % der Theorie.

### Beispiel 2

### 9,10-Dihydro-9-oxa-10-ethoxyphosphaphenanthren (6-Ethoxy-(6H)-dibenz[c,e] [1,2]-oxaphosphorin) aus DOP, Ethanol und Trimethylorthoformiat

0,2 mol (43,2 g) DOP und 0,5 ml konz. HCl wurden in 352 ml Ethanol gelöst und die Mischung wurde auf 90 °C zum Rückfluss erhitzt (leichter Überdruck). Nach 50 min wurden weitere 0, 1 ml konz. HCl zugegeben und anschließend innerhalb von 4 h, 0,4 mol (59,3 g, 66,5 ml) Trimethylorthoformiat zugetropft. Während des Zutropfens des Trimethylorthoformiats wurden alle 30 min jeweils 0,1 ml konz. HCl zugegeben. Nach Beendigung der Reaktion wurden alle flüchtigen Bestandteile am Rotationsverdampfer unter reduziertem Druck entfernt. Der gelbe, ölige Rückstand wurde im Feinvakuum (0,1 mbar) destilliert. Bei 135 bis 142 °C destillierte das Produkt als farblose, ölige Flüssigkeit (erstarrte Schmelze F_{P} = 42 °C). Ausbeute: 44,8 g, 92 % der Theorie.

### Beispiel 3

### 9,10-Dihydro-9-oxa-10-ethoxyphosphaphenanthren (6-Ethoxy-(6H)-dibenz[c,e] [1,2] -oxaphosphorin) aus DOP, Ethanol und Trimethylorthoformiat

5,0 mol (1081 g) DOP und 2,0 ml konz. HCl wurden in 4400 ml Ethanol gelöst und die Mischung wurde auf 95 °C zum Rückfluss erhitzt (leichter Überdruck). Nach 1 h wurden weitere 1,0 ml konz. HCl zugegeben und anschließend innerhalb von 8 h, 6,5 mol (689,8 g, 711,1 ml) Trimethylorthoformiat zugetropft. Während des Zutropfens des Trimethylorthoformiats wurden alle 30 min jeweils 1,0 ml konz. HCl zugefügt. Nach Beendigung der Reaktion wurden alle flüchtigen Bestandteile am Rotationsverdampfer unter reduziertem Druck entfernt. Der gelbe, ölige Rückstand wurde im Feinvakuum (0,1 mbar) destilliert. Bei 135 bis 142 °C destillierte das Produkt als farblose, ölige Flüssigkeit (erstarrte Schmelze F_{P} = 42 °C). Ausbeute: 1001,0 g, 82 % der Theorie.

### Beispiel 4

### 9,10-Dihydro-9-oxa-10-propoxyphosphaphenanthren (6-Propoxy-(6H) -dibenz [c, e] [1, 2] oxaphosphorin) aus DOP, iso-Propanol und Triethylorthoformiat

0,28 mol (59,5 g) DOP und 600 ml iso-Propanol wurden gelöst, 0,6 ml HCl wurden zugegeben und die Mischung auf 105 °C zum Rückfluss erhitzt (leichter Überdruck). Nach 1 h wurden weitere 0,15 ml konz. HCl zugegeben und anschließend innerhalb von 3 h, 0,55 mol (81,5 g, 92 ml) Triethylorthoformiat zugetropft. Während des Zutropfens des Triethylorthoformiats wurden alle 15 min jeweils 0, 15 ml konz. HCl zugefügt. Nach Beendigung der Reaktion wurden alle flüchtigen Bestandteile am Rotationsverdampfer unter reduziertem Druck entfernt. Der gelbe, ölige Rückstand wurde im Feinvakuum (0,1 mbar) destilliert. Bei 142 bis 145 °C destilliert das Produkt als farblose, ölige Flüssigkeit. Ausbeute: 35,2 g, 78 % der Theorie.

### Beispiel 5

### Umlagerung von 9,10-Dihydro-9-oxa-10-methoxyphosphaphenanthren

100 mmol 9,10-Dihydro-9-oxa-10-methoxyphosphaphenanthren (6-Methoxy- (6H) -dibenz [c, e] [1, 2] -oxaphosphorin) wie in Beispiel 1 hergestellt wurden mit 2 mmol Dimethylsulfat in einem Kolben auf 160 °C unter Rühren erhitzt und nach 8 Stunden unter diesen Reaktionsbedingungen war die Umlagerung vollständig. Nach Kühlen und Waschen mit Wasser wurde reines 9,10-Dihydro-9-oxa-10-methylphosphaphenanthren-10-oxid (6-Methyl(6H)benz[c,e][1,2]-oxaphosphorin-6-oxid erhalten.

### Beispiel 6

### Umlagerung von 9,10-Dihydro-9-oxa-10-ethoxyphosphaphenanthren

50 mmol gemäß Beispiel 2 hergestelltes 9,10-Dihydro-9-oxa-10-ethoxyphosphaphenanthren (6-Ethoxy-(6H)-dibenz[c,e][1,2]-oxaphosphorin wurden mit 2 mmol p-Toluolsulfonsäureethylester in einem Kolben auf 160 °C unter Rühren erhitzt. Nach 8 Stunden unter diesen Reaktionsbedingungen war die Umlagerung vollständig. Nach Abkühlen und Waschen mit Wasser wurde reines 9,10-Dihydro-9-oxa-10-ethylphosphaphenanthren (6-Ethyl-(6H)-dibenz-[c,e][1,2]oxaphosphorin-6-oxid) erhalten.

Die Umsetzungen der Beispiele 5 und 6 können unmittelbar im Anschluss an die Herstellung der Edukte gemäß den Beispielen 1 und 2 durchgeführt werden, d. h. ohne dass diese zuvor destilliert werden.

## Patentansprüche

1. Verfahren zur Herstellung von 9,10-Dihydro-9-oxa-10-organylphosphaphenanthren-10-oxid und an den Phenylgruppen substituierten Derivaten desselben, bei dem:
(a) 9,10-Dihydro-9-oxa-10-phosphaphenanthren-10-oxid oder ein Derivat desselben gemäß Formel Ia oder Ib, 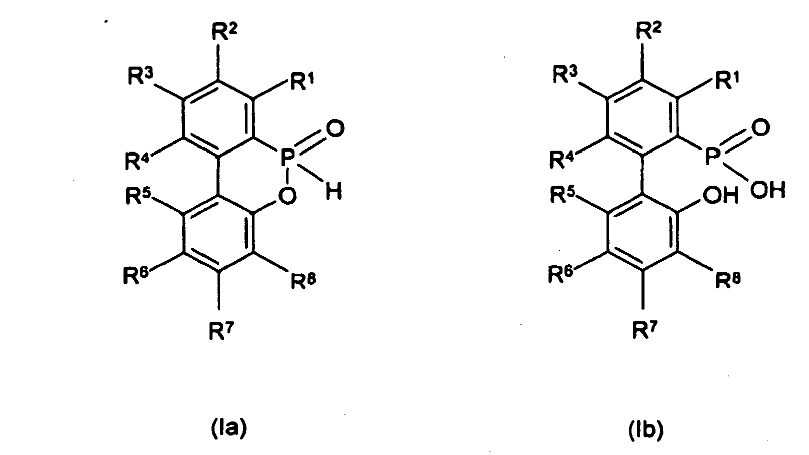 worin R¹ bis R⁸ unabhängig voneinander ein Wasserstoffatom, Halogenatom oder eine Kohlenwasserstoffgruppe sind, wobei die Kohlenwasserstoffgruppen gegebenenfalls ein oder mehrere Heteroatome ausgewählt aus Sauerstoff, Stickstoff, Schwefel, Phosphor, Silicium und Halogen enthalten, und zwei oder mehr der Reste R¹ bis R⁸ gegebenenfalls unter Ausbildung von einem oder mehreren Cyclen verknüpft sind, in Gegenwart von mindestens einem ein- oder mehrwertigen Alkohol der Formel IIIa,
R¹¹(OH)_{y} (IIIa)
in der R¹¹ eine ein- oder mehrwertige Kohlenwasserstoffgruppe ist, die gegebenenfalls ein oder mehrere Heteroatome ausgewählt aus Sauerstoff, Stickstoff, Schwefel, Phosphor, Silicium und Halogen enthält, und y von 1 bis 10 beträgt, mit mindestens einem Orthocarbonsäureester der Formel II,
R⁹C(OR¹⁰)₃ (II)
in der R⁹ ein Wasserstoffatom oder eine Kohlenwasserstoffgruppe ist und die Reste R¹⁰ gleiche oder unterschiedliche Kohlenwasserstoffgruppen sind, die gegebenenfalls ein oder mehrere Heteroatome ausgewählt aus Sauerstoff, Stickstoff, Schwefel, Phosphor, Silicium und Halogen enthalten, unter Bildung eines ersten Zwischenprodukts umgesetzt wird, wobei das erhaltene Produkt die Formel IVa oder IVb 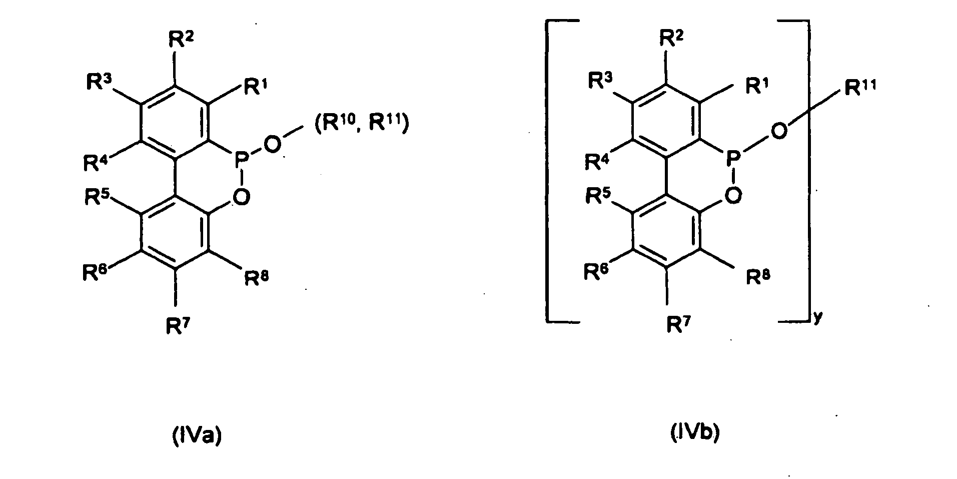 hat, worin die Reste R¹ bis R¹¹ und y die vorstehend angegebenen Bedeutungen haben,
(b) das Zwischenprodukt aus Stufe (a) gegebenenfalls mit mindestens einem weiteren ein- oder mehrwertigen Alkohol gemäß Formel IIIb,
R¹²(OH)_{y} (IIIb)
in der R¹² eine ein- oder mehrwertie Kohlenwasserstoffgruppe ist, die gegebenenfalls ein oder mehrere Heteroatome ausgewählt aus Sauerstoff, Stickstoff, Schwefel, Phosphor, Silicium und Halogen enthält, und y von 1 bis 10 beträgt, und der von dem in Stufe (a) verwendeten Alkohol verschieden ist, unter Bildung eines weiteren Zwischenprodukts umgesetzt wird, wobei das erhaltene Produkt die Formel Va oder Vb 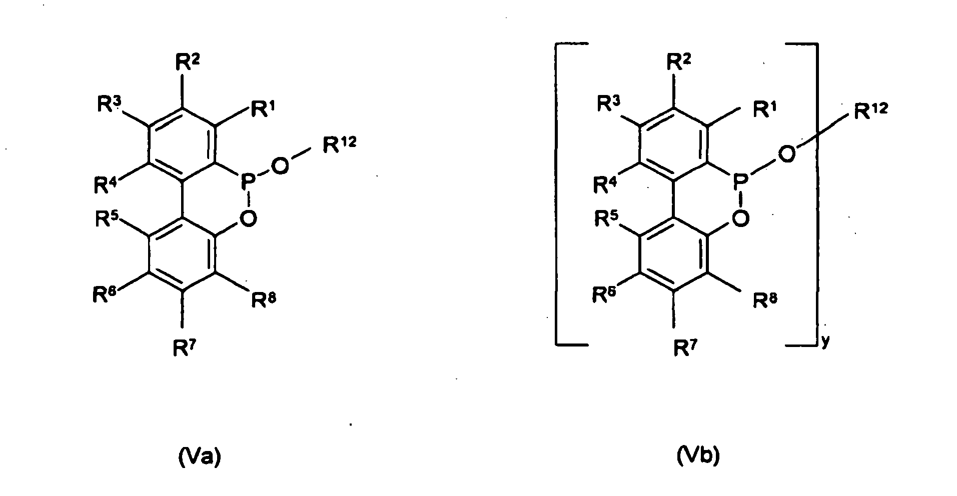 hat, worin die Reste R¹ bis R¹² und y die vorstehend angegebenen Bedeutungen haben, und
(c) das Zwischenprodukt aus den Stufen (a) oder (b) durch Zugabe katalytischer Mengen Alkylierungsmittel in 9,10-Dihydro-9-oxa-10-organylphosphaphenanthren-10-oxid oder ein an den Phenygruppen substituiertes Derivat desselben überführt wird, wobei das erhaltene Produkt die Formel VIa oder VIb 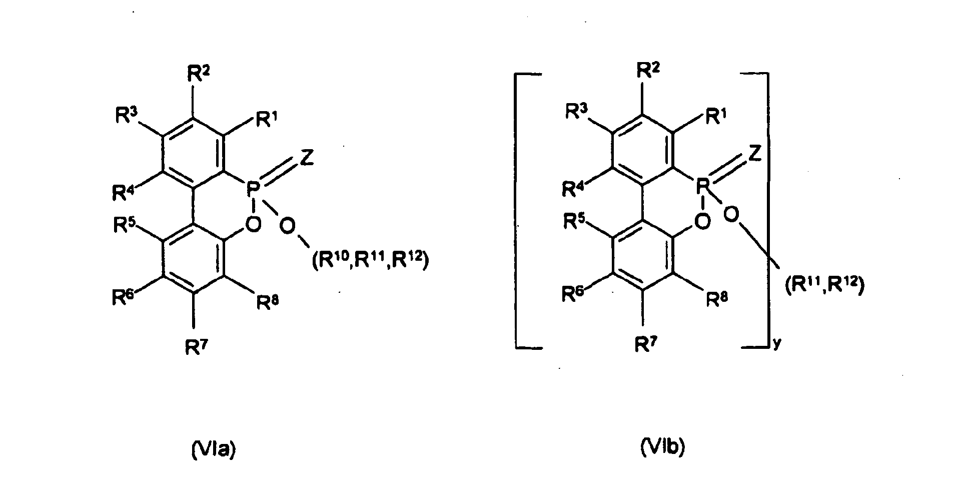 aufweist, worin R¹ bis R¹² und y wie vorstehend definiert sind.

2. Verfahren nach Anspruch 1, **dadurch gekennzeichnet, dass** y in Formel IIIa von 1 bis 4, insbesondere 1, 2, 3 oder 4 beträgt.

3. Verfahren nach Anspruch 1 oder 2, **dadurch gekennzeichnet, dass** y in Formel IIIb von 1 bis 4, insbesondere 1, 2, 3 oder 4 beträgt.

4. Verfahren nach einem der vorhergehenden Ansprüche, **dadurch gekennzeichnet, dass** y für die in den Stufen (a) und (b) verwendeten Alkohole jeweils 1 ist.

5. Verfahren nach einem der Ansprüche 1 bis 3, **dadurch gekennzeichnet, dass** für den in Stufe (a) verwendeten Alkohol y = 1 ist und für den in Stufe (b) verwendeten Alkohol y = 2 bis 4 ist.

6. Verfahren nach einem der Ansprüche 1 bis 3, **dadurch gekennzeichnet, dass** für den in Stufe (a) verwendeten Alkohol y = 2 bis 4 ist.

7. Verfahren nach einem der Ansprüche 1 bis 3, **dadurch gekennzeichnet, dass** y für die in den Stufen (a) und (b) verwendeten Alkohole jeweils 2 bis 4 ist.

8. Verfahren nach einem der Ansprüche 1 bis 3, **dadurch gekennzeichnet, dass** für den in Stufe (a) verwendeten Alkohol y = 2 bis 4 ist und für den in Stufe (b) verwendeten Alkohol y = 1 ist.

9. Verfahren nach einem der vorhergehenden Ansprüche, **dadurch gekennzeichnet, dass** in Stufe (a) 9,10-Dihydro-9-oxa-10-phosphaphenanthren-10-oxid eingesetzt wird.

10. Verfahren nach einem der vorhergehenden Ansprüche, **dadurch gekennzeichnet, dass** als Orthocarbonsäureester ein Orthoameisensäureester ausgewählt aus der Gruppe bestehend aus Trimethylorthoformiat, Triethylorthoformiat und Triallylorthoformiat verwendet wird.

11. Verfahren nach Anspruch 10, **dadurch gekennzeichnet, dass** der einwertige Alkohol (y = 1) ausgewählt ist aus der Gruppe bestehend aus Methanol, Ethanol und Isopropanol.

12. Verfahren nach Anspruch 10, **dadurch gekennzeichnet, dass** der mehrwertige Alkohol (y = 2 bis 4) ausgewählt ist aus der Gruppe bestehend aus einem Diol, Glykol, Polyglykol, dreiwertigem Alkohol und vierwertigem Alkohol.

13. Verfahren nach Ansprüche 12, **dadurch gekennzeichnet, dass** der mehrwertige Alkohol ausgewählt ist aus der Gruppe bestehend aus Ethylenglykol, Glycerin und Pentaerythrit.

14. Verfahren nach einem oder mehreren der vorhergehenden Ansprüche, **dadurch gekennzeichnet, dass** der Katalysator in Stufe (c) ausgewählt ist aus Estern der Schwefelsäure und Estern der Sulfonsäure.

15. Verfahren nach einem der vorhergehenden Ansprüche 1 bis 14, **dadurch gekennzeichnet, dass** in den Stufen (a) und/oder (b) ein Katalysator ausgewählt aus der Gruppe bestehend aus Lewis-Säuren und Brönsted-Säuren verwendet wird.

16. Verfahren nach Anspruch 15, **dadurch gekennzeichnet, dass** der Katalysator ausgewählt ist aus Halogenwasserstoffen und organischen Sulfonsäuren.

17. Verfahren nach Anspruch 16, **dadurch gekennzeichnet, dass** der Katalysator Salzsäure oder p-Toluolsulfonsäure ist.

18. Verfahren nach einem der Ansprüche 15 bis 17, **dadurch gekennzeichnet, dass** überschüssiger Alkohol entfernt und der in den Stufen (a) und/oder (b) verwendete Katalysator wiedergewonnen wird.

19. Verfahren nach einem der vorhergehenden Ansprüche, **dadurch gekennzeichnet, dass** die Reaktionsstufen (a) bis (c) in einem Reaktionsgefäß durchgeführt werden.

20. Verfahren zur Herstellung eines flammhemmend ausgerüsteten Natur- oder Kunststoffes, **dadurch gekennzeichnet, dass** als Zwischenprodukt gemäß einem der vorhergehenden Ansprüche 1 bis 23 ein 9, 10-Dihydro-9-oxa-10-organylphosphaphenanthren-10-oxid und an den Phenylgruppen substituierten Derivaten desselben hergestellt wird und dieses Zwischenprodukt in den Natur- oder Kunststoff eingebracht wird.

21. Verfahren nach Anspruch 20, **dadurch gekennzeichnet, dass** das Zwischenprodukt auf additive oder reaktive Weise in den Natur- oder Kunststoff eingebracht wird.

22. Verfahren nach Anspruch 20, **dadurch gekennzeichnet, dass** der Kunststoff ausgewählt ist aus der Gruppe bestehend aus Polyester, Polyamid, Polycarbonat, Polystyrol, Polyethylen, Polypropylen, Phenol- und Epoxidharzen.

## Claims

1. A process for the preparation of 9,10-dihydro-9-oxa-10-organylphosphaphenanthrene-10-oxide and derivatives of same substituted on the phenyl groups, in which:
(a) 9,10-dihydro-9-oxa-10-phosphaphenanthrene-10-oxide or a derivative of same of Formula (Ia) or (Ib) 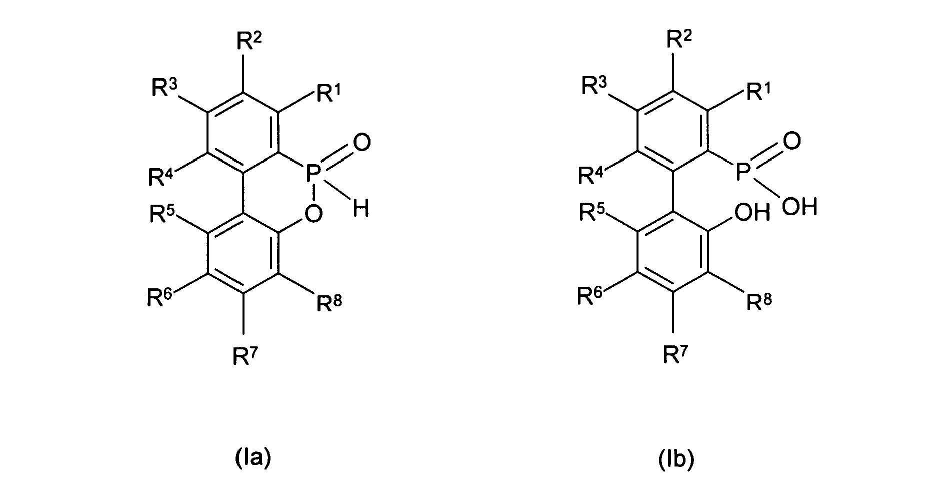 in which R¹ to R⁸, independently of each other, are a hydrogen atom, halogen atom or a hydrocarbon group, the hydrocarbon groups optionally containing one or more heteroatoms selected from oxygen, nitrogen, sulphur, phosphorus, silicon and halogen, and two or more radicals R¹ to R⁸ being optionally linked with formation of one or more cycles, is reacted in the presence of at least one mono- or polyhydric alcohol of Formula (IIIa)
R¹¹(OH)_{y} (IIIa)
in which R¹¹ is a mono- or polyvalent hydrocarbon group which optionally contains one or more heteroatoms selected from oxygen, nitrogen, sulphur, phosphorus, silicon and halogen, and y is 1 to 10, with at least one ortho ester of Formula (II)
R⁹C(OR¹⁰)₃ (II)
in which R⁹ is a hydrogen atom or a hydrocarbon group and the radicals R¹⁰ are the same or different hydrocarbon groups which optionally contain one or more heteroatoms selected from oxygen, nitrogen, sulphur, phosphorus, silicon and halogen with formation of a first intermediate product, wherein the product obtained has the Formula (IVa) or (IVb) 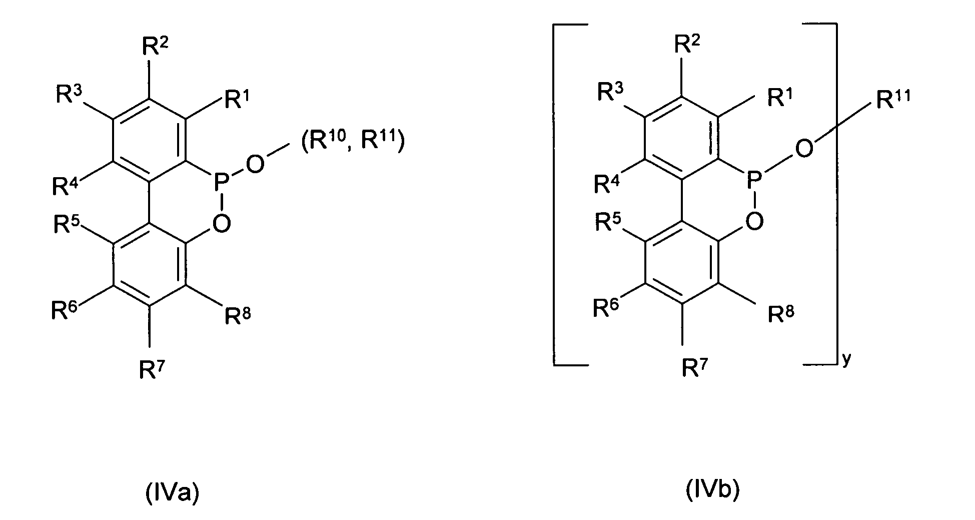 in which the radicals R¹ to R¹¹ and y have the meanings given above;
(b) the intermediate product from step (a) is optionally reacted with at least one further mono- or polyhydric alcohol Formula (IIIb)
R¹²(OH)_{y} (IIIb)
in which R¹² is a mono- or polyvalent hydrocarbon group which optionally contains one or more heteroatoms selected from oxygen, nitrogen, sulphur, phosphorus, silicon and halogen, and y is 1 to 10, with formation of a further intermediate product of Formula (Va) or (Vb); 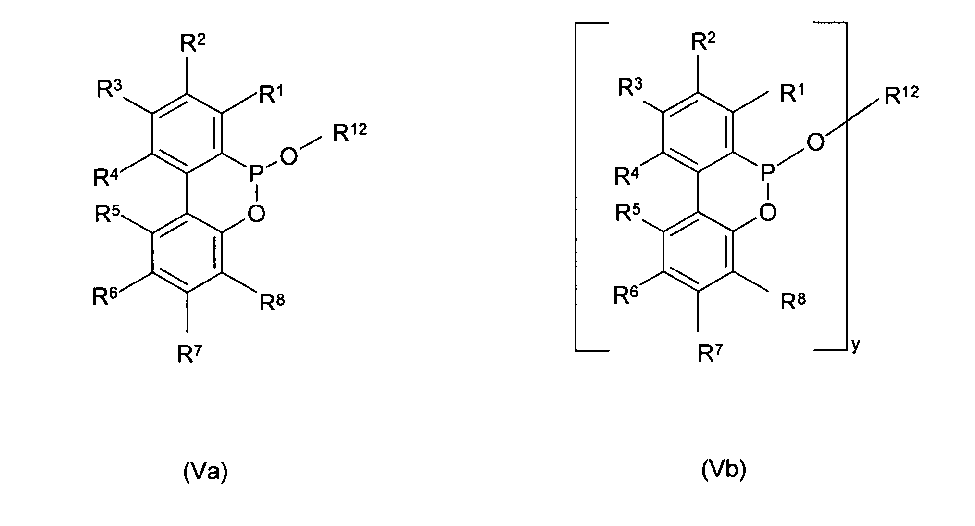 wherein the radicals R¹ to R¹² and y have the meanings given above;
(c) the intermediate product from step (a) or (b) is transformed by addition of catalytic quantities of alkylation agent into 9,10-dihydro-9-oxa-10-organyl-phosphaphenanthrene-10-oxide or a derivative of same substituted on the phenyl groups, wherein the product obtained has the Formula (VIa) or (VIb) 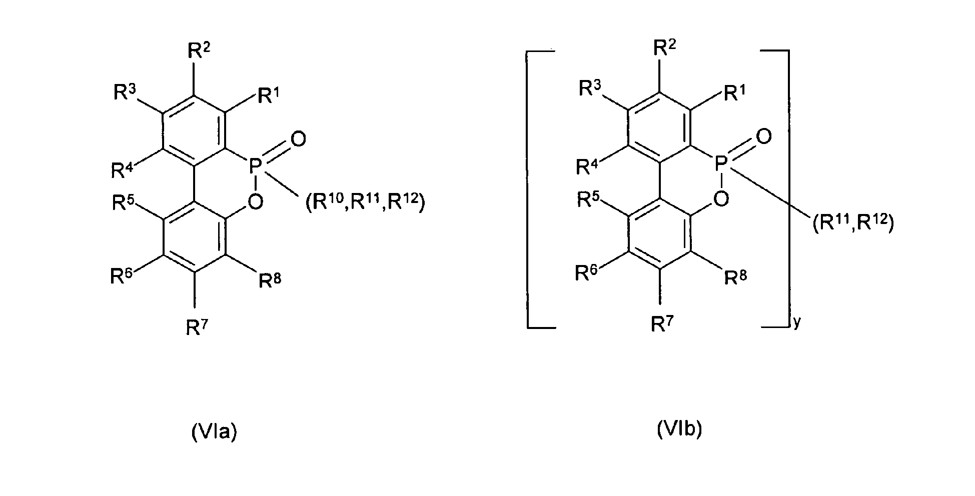
in which R¹ to R¹² and y are defined as stated above.

2. The process according to claim 1, **characterized in that** in Formula (IIIa) y is 1 to 4, in particular 1, 2, 3 or 4.

3. The process according to claim 1 or claim 2, **characterized in that** in Formula (IIIb) y is 1 to 4, in particular 1, 2, 3 or 4.

4. The process according to one of the previous claims, **characterized in that** y is 1 for the alcohols used in each of the steps (a) and (b).

5. The process according to one of claims 1 to 3, **characterized in that** y = 1 for the alcohol used in step (a) and y = 2 to 4 for the alcohol used in step (b).

6. The process according to one of claims 1 to 3, **characterized in that** y = 2 to 4 for the alcohol used in step (a).

7. The process according to one of claims 1 to 3, **characterized in that** y is 2 to 4 for the alcohols used in each of the steps (a) and (b).

8. The process according to one of claims 1 to 3, **characterized in that** y = 2 to 4 for the alcohol used in step (a) and y = 1 for the alcohol used in step (b).

9. The process according to one of the previous claims, **characterized in that** 9,10-dihydro-9-oxa-10-phosphaphenanthrene-10-oxide is used in step (a).

10. The process according to one of the previous claims, **characterized in that** an orthoformic acid ester selected from the group consisting of trimethyl orthoformate, triethyl orthoformate and triallyl orthoformate is used as the ortho ester.

11. The process according to claim 10, **characterized in that** the monohydric alcohol (y = 1) is selected from the group consisting of methanol, ethanol and isopropanol.

12. The process according to claim 10, **characterized in that** the polyhydric alcohol (y = 2 to 4) is selected form the group consisting of a diol, glycol, polyglycol, trihydric alcohol and tetrahydric alcohol.

13. The process according to claim 12, **characterized in that** the polyhydric alcohol is selected from the group consisting of ethylene glycol, glycerol and pentaerythritol.

14. The process according to one or more of the previous claims, **characterized in that** the catalyst in step (c) is selected from esters of sulphuric acid and esters of sulphonic acid.

15. The process according to one of the previous claims 1 to 14, **characterized in that** a catalyst selected from the group consisting of Lewis acids and Brönsted acids is used in steps (a) and/or (b).

16. The process according to claim 15, **characterized in that** the catalyst is selected from hydrogen halides and organic sulphonic acids.

17. The process according to claim 16, **characterized in that** the catalyst is hydrochloric acid or p-toluenesulphonic acid.

18. The process according to one of claims 15 to 17, **characterized in that** excess alcohol is removed and the catalyst used in steps (a) and/or (b) is recovered.

19. The process according to one of the previous claims, **characterized in that** reaction steps (a) to (c) are carried out in one reaction vessel.

20. A process for the preparation of a natural product or plastic with flame-retardant finishing, **characterized in that** a 9,10-dihydro-9-oxa-10-organylphosphaphenanthrene-10-oxide and derivatives thereof substituted on the phenyl groups is prepared as intermediate product according to one of the previous claims 1 to 19 and this intermediate product is introduced into the natural product or plastic.

21. The process according to claim 20, **characterized in that** the intermediate product is introduced into the natural product or plastic by addition or reaction.

22. The process according to claim 20, **characterized in that** the plastic is selected from the group consisting of polyester, polyamide, polycarbonate, polystyrene, polyethylene, polypropylene, phenolic and epoxy resins.

## Revendications

1. Procédé pour la préparation de 9,10-dihydro-9-oxa-10-organyl-phosphaphénanthrène-10-oxyde et de dérivés de ce composé substitués sur les groupes phényles, dans lequel
a) on fait réagir du 9,10-dihydro-9-oxa-10-phosphaphénanthrène-10-oxyde ou un dérivé de ce composé selon la formule Ia ou Ib, 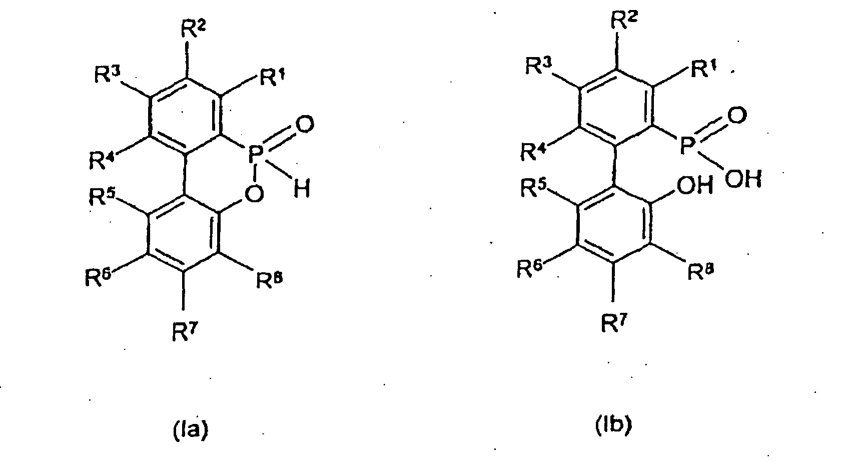 formules dans lesquelles R¹ à R⁸ représentent, indépendamment les uns des autres, un atome d'hydrogène, un atome d'halogène ou un groupe hydrocarboné, les groupes hydrocarbonés contenant éventuellement un ou plusieurs hétéroatomes choisis parmi les atomes d'oxygène, d'azote, de soufre, de phosphore, de silicium et d'halogène, et deux ou plus de deux radicaux R¹ à R⁸ étant éventuellement reliés avec formation d'un ou plusieurs cycles, en présence d'au moins un alcool mono- ou polyvalent de formule IIIa,
R¹¹(OH)_{y} (IIIa)
dans laquelle R¹¹ est un groupe hydrocarboné mono- ou polyvalent qui contient éventuellement un ou plusieurs hétéroatomes choisis parmi les atomes d'oxygène, d'azote, de soufre, de phosphore, de silicium et d'halogène, et y va de 1 à 10, avec au moins un ester d'acide orthocarboxylique de formule II,
R⁹C(OR¹⁰)₃ (II)
dans laquelle R⁹ est un atome d'hydrogène ou un groupe hydrocarboné et les radicaux R¹⁰ sont des groupes hydrocarbonés identiques ou différents qui contiennent éventuellement un ou plusieurs hétéroatomes choisis parmi les atomes d'oxygène, d'azote, de soufre, de phosphore, de silicium et d'halogène, avec formation d'un premier produit intermédiaire, le produit obtenu correspondant à la formule IVa ou IVb 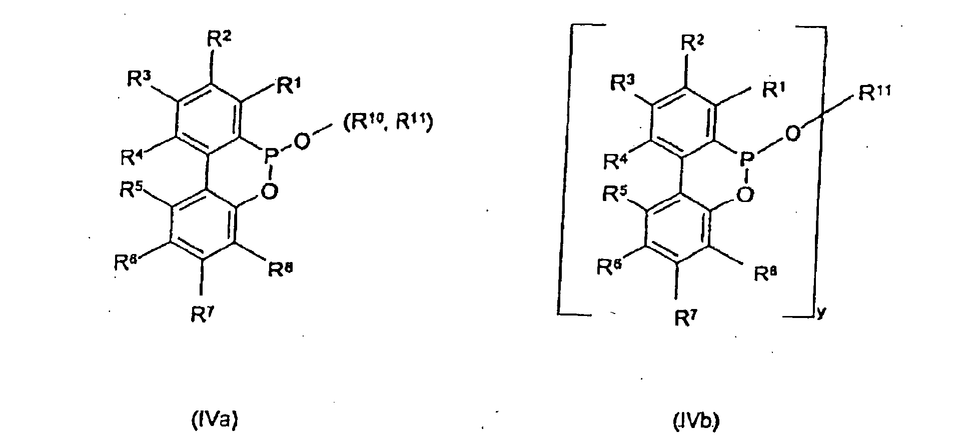 où les radicaux R¹ à R¹¹ et y ont les significations indiquées précédemment,
(b) on fait éventuellement réagir le produit intermédiaire provenant de l'étape (a) avec au moins un autre alcool mono- ou polyvalent selon la formule IIIb,
R¹²(OH)_{y} (IIIB)
dans laquelle R¹² est un groupe hydrocarboné mono- ou polyvalent qui contient éventuellement un ou plusieurs hétéroatomes choisis parmi les atomes d'oxygène, d'azote, de soufre, de phosphore, de silicium et d'halogène, et y va de 1 à 10, et qui est différent de l'alcool utilisé dans l'étape (a), avec formation d'un autre produit intermédiaire, le produit de formule Va ou Vb obtenu correspondant à la formule Va ou Vb 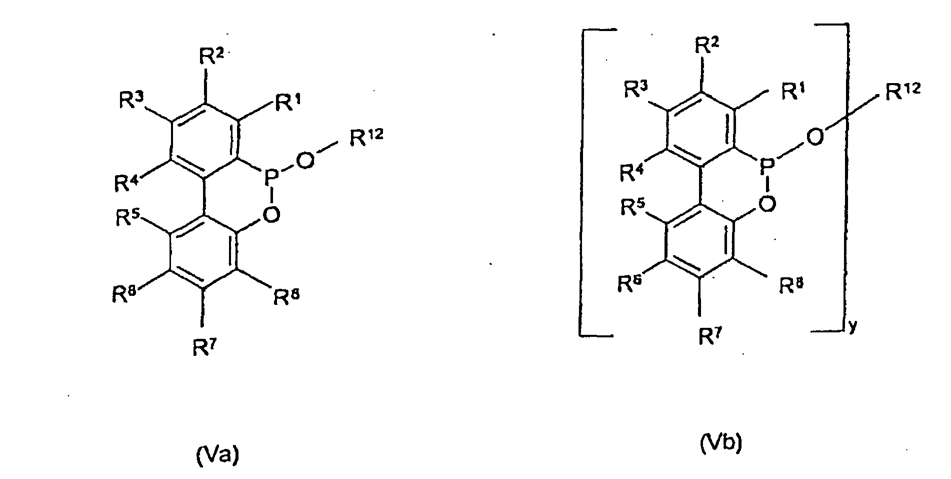 formules dans lesquelles les radicaux R¹ à R¹² et y ont les significations indiquées précédemment, et
(c) on convertit le produit intermédiaire provenant de l'étape (a) ou (b), par addition de quantités catalytiques d'agent d'alkylation, en 9,10-dihydro-9-oxa-10-organyl-phosphaphénanthrène-10-oxyde ou en un dérivé substitué sur les groupes phényles de ce composé, le produit obtenu correspondant à la formule VIa ou VIb 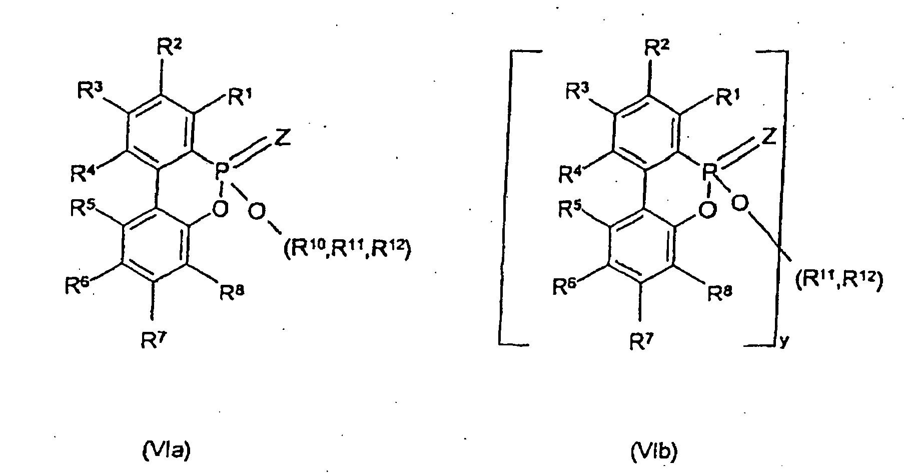
où R¹ à R¹² sont tels que définis précédemment.

2. Procédé selon la revendication 1, **caractérisé en ce que** y dans la formule IIIa va de 1 à 4, en particulier est égal à 1, 2, 3 ou 4.

3. Procédé selon la revendication 1 ou 2, **caractérisé en ce que** y dans la formule IIIb va de 1 à 4, en particulier est égal à 1, 2, 3 ou 4.

4. Procédé selon l'une quelconque des revendications précédentes, **caractérisé en ce que** y pour les alcools utilisés dans les étapes (a) et (b) est égal à 1 dans chaque cas.

5. Procédé selon l'une quelconque des revendications 1 à 3, **caractérisé en ce que** y = 1 pour l'alcool utilisé dans l'étape (a) et y = 2 à 4 pour l'alcool utilisé dans l'étape (b).

6. Procédé selon l'une quelconque des revendications 1 à 3, **caractérisé en ce que** y = 2 à 4 pour l'alcool utilisé dans l'étape (a).

7. Procédé selon l'une quelconque des revendications 1 à 3, **caractérisé en ce que** y pour les alcools utilisés dans les étapes (a) et (b) va dans chaque cas de 2 à 4.

8. Procédé selon l'une quelconque des revendications 1 à 3, **caractérisé en ce que** y = 2 à 4 pour l'alcool utilisé dans l'étape (a) et y = 1 pour l'alcool utilisé dans l'étape (b).

9. Procédé selon l'une quelconque des revendications précédentes, **caractérisé en ce qu'**on utilise dans l'étape (a) du 9,10-dihydro-9-oxa-10-phosphaphénanthrène-10-oxyde.

10. Procédé selon l'une quelconque des revendications précédentes, **caractérisé en ce qu'**on utilise comme ester d'acide orthocarboxylique un ester d'acide orthoformique choisi dans le groupe constitué par l'orthoformiate de triméthylol, l'orthoformiate de triéthylol et l'orthoformiate de triallyle.

11. Procédé selon la revendication 10, **caractérisé en ce que** l'alcool monovalent (y = 1) est choisi dans le groupe constitué par le méthanol, l'éthanol et l'isopropanol.

12. Procédé selon la revendication 10, **caractérisé en ce que** l'alcool polyvalent (y = 2 à 4) est choisi dans le groupe constitué par un diol, un glycol, un polyglycol, un alcool trivalent et un alcool tétravalent.

13. Procédé selon la revendication 12, **caractérisé en ce que** l'alcool polyvalent est choisi dans le groupe constitué par l'éthylèneglycol, le glycérol et le pentaérythritol.

14. Procédé selon un ou plusieurs des revendications précédentes, **caractérisé en ce que** le catalyseur dans l'étape (c) est choisi parmi des esters de l'acide sulfurique et des esters de l'acide sulfonique.

15. Procédé selon l'une quelconque des revendications précédentes 1 à 14, **caractérisé en ce que** dans l'étape (a) et/ou l'étape (b) on utilise un catalyseur choisi dans le groupe constitué par les acides de Lewis et les acides de Brönsted.

16. Procédé selon la revendication 15, **caractérisé en ce que** le catalyseur est choisi parmi les hydracides halogénés et les acides sulfoniques organiques.

17. Procédé selon la revendication 16, **caractérisé en ce que** le catalyseur est l'acide chlorhydrique ou l'acide p-toluènesulfonique.

18. Procédé selon l'une quelconque des revendications 15 à 17, **caractérisé en ce que** l'alcool en excès est éliminé et le catalyseur utilisé dans l'étape (a) et/ou l'étape (b) est récupéré.

19. Procédé selon l'une quelconque des revendications précédentes, **caractérisé en ce que** les étapes de réactions (a) à (c) sont effectuées dans un récipient de réaction.

20. Procédé pour la production d'une matière naturelle ou synthétique à traitement ignifuge, **caractérisé en ce qu'**on prépare en tant que produit intermédiaire selon l'une quelconque des revendications 1 à 19 précédentes un 9,10-dihydro-9-oxa-10-organylphosphaphénanthrène-10-oxyde et des dérivés substitués sur les groupes phényles de ce composé et on introduit ce produit intermédiaire dans la matière naturelle ou synthétique.

21. Procédé selon la revendication 20, **caractérisé en ce que** le produit intermédiaire est introduit de façon réactive ou additive dans la matière naturelle ou synthétique.

22. Procédé selon la revendication 20, **caractérisé en ce que** la matière synthétique est choisie dans le groupe constitué par le polyester, le polyamide, le polycarbonate, le polystyrène, le polyéthylène, le polypropylène, les résines phénoliques et les résines époxy.
